# EUROPÄISCHE PATENTANMELDUNG

(11) **EP 2 087 817 A1**
(43) Veröffentlichungstag der Anmeldung: **12.08.2009**
(21) Anmeldenummer: 09001762.5
(22) Anmeldetag: 09.02.2009
(51) Int. Cl.: A47J 27/00, A47J 36/02

(54) **Kochgeschirr, insbesondere Topf oder Pfanne**

(30) Priorität: 08.02.2008 DE 202008001832 U; 08.05.2008 DE 202008006367 U
(71) Anmelder: Heinrich Berndes Haushaltstechnik GmbH & Co. KG, 59757 Arnsberg (DE)
(72) Erfinder: Laukhardt, Günter, 55271 Stadecken- Elsheim (DE)
(74) Vertreter: Gesthuysen, von Rohr & Eggert

(57) **Zusammenfassung**

Dargestellt und beschrieben ist ein Kochgeschirr, insbesondere ein Topf (1), mit einem ebenen Boden (3) und mit einer umlaufenden und ansteigenden Wand (4).

Bei dem erfindungsgemäßen Kochgeschirr wird dadurch ein möglichst angenehmes und effizientes Kochen oder Braten von Speisen ermöglicht, daß sowohl der Boden (3) als auch die Wand (4) aus Magnesium oder aus einer Magnesiumlegierung bestehen, und daß der Boden (3) und die Wand (4) sowohl auf der Innenfläche (7) als auch auf der Außenfläche (8) eine Versiegelung (9), insbesondere eine Keramikversiegelung oder eine Silikonversiegelung aufweisen.

## Beschreibung

Die Erfindung betrifft ein Kochgeschirr, insbesondere einen Topf oder eine Pfanne, mit einem ebenen Boden und mit einer umlaufenden und ansteigenden Wand.

Kochgeschirre, insbesondere Töpfe, Pfannen aber auch Kasserollen oder Woks, sind aus dem Stand der Technik in einer Vielzahl unterschiedlicher Ausführungsformen bekannt. Neben den unterschiedlichen Formen des Kochgeschirrs - rund, oval, rechteckig oder quadratisch - sowie den unterschiedlichen Höhen unterscheiden sich die bekannten Kochgeschirre insbesondere auch durch die unterschiedlichen Materialien aus denen das Kochgeschirr hergestellt ist. Als bevorzugte Materialien werden dabei heutzutage Aluminium bzw. Aluminiumlegierungen und Edelstahl verwendet. Darüber hinaus gibt es jedoch auch Kochgeschirr aus anderen Materialien wie Stahl, emaillierten Metall oder Keramik.

Töpfe und Pfanne aus Aluminium, insbesondere aus Aluminium-Druckguß haben dabei den Vorteil, daß es sich hierbei um sehr widerstandsfähige Produkte für höchste Beanspruchung handelt, die darüber hinaus nicht nur auf verschiedenen Herdtypen - Gas, Elektro, Glaskeramik oder Halogen - sondern auch im Backofen eingesetzt werden können. Nachteilig ist hierbei jedoch, daß derartige Töpfe und Pfannen ein relativ hohes Gewicht aufweisen, so daß das Arbeiten insbesondere mit großen Töpfen und Pfannen schnell mühsam werden kann.

Der vorliegenden Erfindung liegt daher die Aufgabe zugrunde, ein Kochgeschirr anzugeben, welches ein möglichst angenehmes und effizientes Kochen oder Braten von Speisen ermöglicht.

Diese Aufgabe ist bei dem eingangs genannten Kochgeschirr dadurch gelöst, daß sowohl der Boden als auch die Wand aus Magnesium oder aus einer Magnesiumlegierung bestehen, und daß der Boden und die Wand sowohl auf der Innenfläche als auch auf der Außenfläche eine Versiegelung, insbesondere eine Keramikversiegelung oder eine Silikonversiegelung aufweisen. Durch die Verwendung eines Kochgeschirrs aus Magnesium oder einer Magnesiumlegierung, welche als Hauptbestandteil Magnesium aufweist, kann zunächst eine spürbare Reduzierung des Gewichts des Kochgeschirrs erreicht werden, da Magnesium ca. 30 % leichter als Aluminium ist. Eine zusätzliche Gewichtsreduzierung ist darüber hinaus dadurch möglich, das Magnesium bzw. eine Magnesiumlegierung eine höhere Stabilität als beispielsweise Aluminium bzw. eine Aluminiumlegierung aufweist, so daß bei vergleichbaren Abmessungen des Kochgeschirrs sowohl die Decke des Bodens als auch die Dicke der Wand reduziert werden kann. Hierdurch ist nochmals eine Gewichtsreduzierung von bis zu 25 % möglich. Darüber hinaus hat die Verwendung von Magnesium bzw. einer Magnesiumlegierungen für ein Kochgeschirr den Vorteil, daß sich die Zeit beim Aufheizen des Kochgeschirrs verringert, was gleichzeitig zu einer Reduzierung der benötigten Energie führt.

Um eine Korrosion der Oberfläche des Kochgeschirrs zu verhindern weist der Boden und die Wand sowohl auf der Innenfläche als auch auf der Außenfläche eine Versiegelung auf; das Kochgeschirr ist somit vollständig von einer Versiegelung überzogen. Die Verwendung einer Keramikversiegelung hat den Vorteil, daß neben der Vermeidung von Korrosionsbildung auf der Oberfläche des Kochgeschirrs gleichzeitig eine hohe Kratzfestigkeit sowie gute Antihaft-Eigenschaften erreicht werden. Vorzugsweise wird eine Versiegelung mit einer hohen Hitzebeständigkeit, bis über 400°C verwendet.

Die Verwendung von Magnesium bzw. einer Magnesiumlegierung für das Kochgeschirr sowie von Keramik für die Versiegelung hat darüber hinaus den Vorteil, daß ausschließlich natürliche Materialien verwendet werden, die gesundheitlich unbedenklich sind.

Anstelle der Verwendung von reinem Magnesium für das Kochgeschirr wird vorzugsweise eine Magnesiumlegierung verwendet, die als Hauptbestandteil Magnesium mit mindestens 75 Gew.-% Magnesium, vorzugsweise mehr als 85 Gew.-% Magnesium aufweist. Darüber hinaus weist die Magnesiumlegierung vorzugsweise einen geringeren Anteil an Aluminium, insbesondere weniger als 15 Gew.-% Aluminium auf. Zusätzlich kann die Magnesiumlegierung noch einen geringen Anteil an Zink und/oder Mangan aufweisen, wobei der Anteil an Zink und/oder Mangan vorzugsweise kleiner als der Anteil an Aluminium ist. Weist die Magnesiumlegierung neben dem Hauptbestandteil Magnesium und einem Anteil Aluminium zusätzlich noch Zink und Mangan auf, so ist vorzugsweise der Anteil an Mangan nochmals geringer als der Anteil an Zink.

Gemäß einer weiteren vorteilhaften Ausgestaltung ist das erfindungsgemäße Kochgeschirr im Druckgußverfahren, insbesondere im Vakuum-Druckgußverfahren hergestellt. Bei einem derartigen Magnesium-Vakuum-Druckguß Kochgeschirr sind sehr gute Werte bezüglich der Wärmeaufnahme und der Speicherfähigkeit von Wärme erreichbar, was zu einer Zeitersparnis bei Koch und Braten führt und damit die Freude beim Koch erhöht.

Vorzugsweise ist darüber hinaus vorgesehen, daß das Magnesium-Kochgeschirr vor dem Aufbringen der Versiegelung sandgestrahlt wird, wodurch eine besonders gute Anhaftung der Versiegelung, insbesondere einer Keramikversiegelung auf dem Kochgeschirr erreicht wird.

Im einzelnen gibt es nun eine Vielzahl von Möglichkeiten, das erfindungsgemäße Kochgeschirr auszugestalten und weiterzubilden. Dazu wird verwiesen sowohl auf die dem Patentanspruch 1 nachgeordneten Patentansprüche als auch auf die nachfolgende Beschreibung zweier Ausfiihrungsbeispiele in Verbindung mit der Zeichnung. In der Zeichnung zeigen
- Fig. 1: eine Schnittdarstellung eines erfindungsgemäßen Topfes und
- Fig. 2: eine Schnittdarstellung einer erfindungsgemäßen Pfanne.

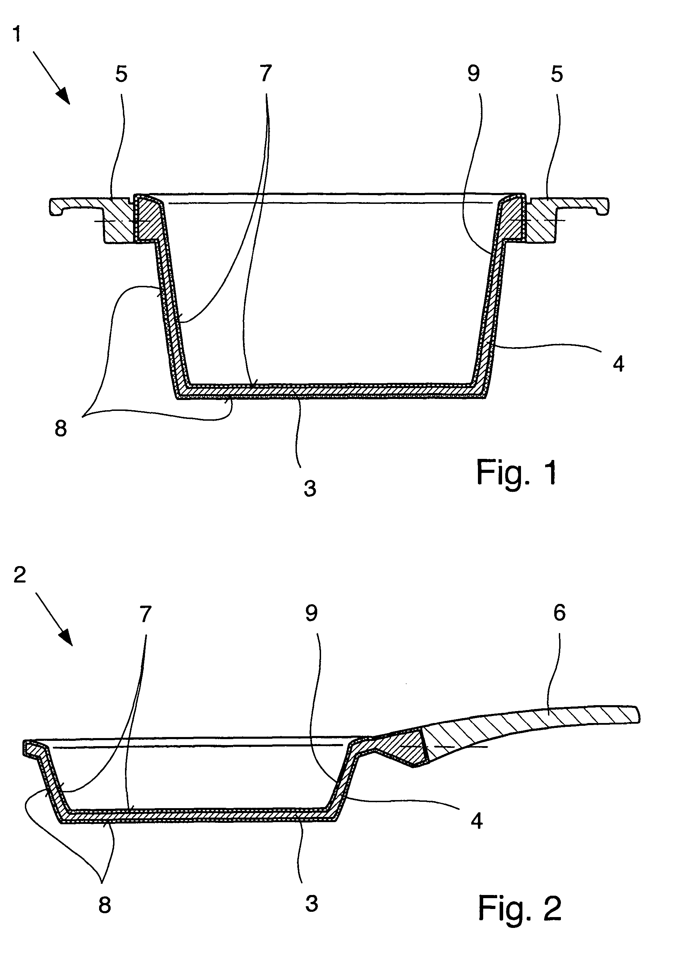

Die Fig. 1 und 2 zeigen einen Topf 1 und eine Pfanne 2, die jeweils einen ebenen Boden 3 und eine umlaufende, ansteigende Wand 4 aufweisen. Der in Fig. 1 dargestellte Topf 1 weist zwei seitliche Griffe 5 und die in Fig. 2 dargestellte Pfanne 2 einen länglichen Stielgriff 6 auf. Der dargestellte Topf 1 und die dargstellte Pfanne 2 weisen jeweils einen runden Boden 3 bzw. eine runde Grundfläche 3 auf. Unabhängig davon könne der Topf 1 oder die Pfanne 2 jedoch auch eine ovale, rechteckige oder quadratische Grundform aufweisen. Sowohl bei dem in Fig. 1 dargestellten Topf 1 als auch bei der in Fig. 2 dargestellten Pfanne 2 bestehen sowohl der Boden 3 als auch die Wand 4 aus einer Magnesiumlegierung, d. h. der Topf 1 und die Pfanne 2 bestehen vollständig - mit Ausnahme der Griffe 5 bzw. des Stielgriffes 6 - aus der Magnesiumlegierung. Darüber hinaus weisen der Boden 3 und die Wand 4 sowohl auf ihrer Innenfläche 7 als auch auf ihrer Außenfläche 8 eine Versiegelung 9, insbesondere eine Keramikversiegelung auf, so daß der Topf 1 bzw. die Pfanne 2 vollständig von der Versiegelung 9 überzogen ist.

Lediglich der Bereich des Topfes 1 bzw. der Pfanne 2, an dem die Griffe 5 bzw. der Stielgriff 6 angebraucht sind, kann von der Versiegelung 9 ausgespart sein. Aus Gründen der einfachen Herstellung wird in der Regel jedoch der Topf 1 bzw. die Pfanne 2 auch an diesen Stellen von der Versiegelung 9 überzogen sein.

Außerdem ist es möglich, daß der Topf 1 und die Griffe 5 einstückig ausgebildet sind, so daß auch die Griffe 5 aus einer Magnesiumlegierung bestehen und eine Versiegelung 9 aufweisen. Dies ist grundsätzlich zwar auch bei der Pfanne 2 möglich, in der Regel weist die Pfanne 2 jedoch einen Stielgriff 6 aus einem anderen Material, beispielsweise Edelstahl, Kunststoff oder Holz auf, wobei der Stielgriff 6 auch abnehmbar ausgeführt sein kann.

## Patentansprüche

1. Kochgeschirr, insbesondere Topf (1) oder Pfanne (2), mit einem ebenen Boden (3) und mit einer umlaufenden und ansteigenden Wand (4),
**dadurch gekennzeichnet,**
**daß** sowohl der Boden (3) als auch die Wand (4) aus Magnesium oder aus einer Magnesiumlegierung bestehen, und daß der Boden (3) und die Wand (4) sowohl auf der Innenfläche (7) als auch auf der Außenfläche (8) eine Versiegelung (9), insbesondere eine Keramikversiegelung oder eine Silikonversiegelung aufweisen.

2. Kochgeschirr nach Anspruch 1, **dadurch gekennzeichnet, daß** die Magnesiumlegierung neben Magnesium als Hauptbestandteil, vorzugsweise mindestens 75 Gew.-% Magnesium, einen geringen Anteil an Aluminium aufweist.

3. Kochgeschirr nach Anspruch 2, **dadurch gekennzeichnet, daß** die Magnesiumlegierung zusätzlich einen geringen Anteil an Zink und/oder Mangan aufweist.

4. Kochgeschirr nach Anspruch 3, **dadurch gekennzeichnet, daß** der Anteil an Zink und/oder Mangan kleiner als der Anteil an Aluminium ist.

5. Kochgeschirr nach einem der Ansprüche 1 bis 4, **dadurch gekennzeichnet, daß** die Versiegelung (9) eine hohe Hitzebeständigkeit, vorzugsweise bis über 400°C aufweist.

6. Kochgeschirr nach einem der Ansprüche 1 bis 5, **dadurch gekennzeichnet, daß** das Kochgeschirr im Druckgußverfahren, insbesondere im Vakuum-Druckgußverfahren hergestellt ist.

7. Kochgeschirr nach einem der Ansprüche 1 bis 6, **dadurch gekennzeichnet, daß** das Kochgeschirr vor dem Aufbringen der Versiegelung (9) sandgestrahlt worden ist.
